(19) Europäisches Patentamt
European Patent Office
Office européen des brevets

(11) EP 3 176 187 B2

(12) **NEW EUROPEAN PATENT SPECIFICATION**
After opposition procedure

(45) Date of publication and mention of the opposition decision:
**06.07.2022 Bulletin 2022/27**

(45) Mention of the grant of the patent:
**07.08.2019 Bulletin 2019/32**

(21) Application number: **15003435.3**

(22) Date of filing: **02.12.2015**

(51) International Patent Classification (IPC):
***C08F 218/08*** *(2006.01)* ***C08F 220/18*** *(2006.01)*
***C09D 133/08*** *(2006.01)*

(52) Cooperative Patent Classification (CPC):
(C-Sets available)
**C08F 218/08; C08F 220/1802; C08F 220/1804; C09D 133/08** (Cont.)

(54) **FORMALDEHYDE-FREE THERMALLY CURABLE POLYMERS**

FORMALDEHYDFREIE WÄRMEHÄRTBARE POLYMERE

POLYMÈRES THERMIQUEMENT DURCISSABLES EXEMPTS DE FORMALDÉHYDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.06.2017 Bulletin 2017/23**

(73) Proprietor: **Organik Kimya Sanayi Ve Tic. A.S.**
**ISTANBUL (TR)**

(72) Inventors:
- **GÖKTAS, Miray**
**34075 KEMERBURGAZ/EYUP**
**ISTANBUL (TR)**
- **PEREZ LORENZO, Guillermo**
**34075 KEMERBURGAZ/EYRUP**
**ISTANBUL (TR)**
- **KONTART, Oya**
**34075 KEMERBURGAZ/EYRUP**
**ISTANBUL (TR)**
- **ALTINOK, Sibel**
**34075 KEMERBURGAZ/EYRUP**
**ISTANBUL (TR)**
- **BAKIRCI, Utkan Bahri**
**Cendere Yolu No: 146**
**34075 Kemerburgaz/Eyup**
**Istanbul (TR)**

(74) Representative: **Müller-Boré & Partner**
**Patentanwälte PartG mbB**
**Friedenheimer Brücke 21**
**80639 München (DE)**

(56) References cited:
**EP-A1- 2 889 938**
**EP-A2- 0 326 298**
**EP-A2- 0 783 051**
**WO-A1-2011/029810**
**JP-A- H05 301 907**
**JP-A- 2007 269 991**
**US-A- 4 476 182**
**US-A- 5 198 492**
**US-A1- 2012 156 467**
**US-B2- 9 023 948**

Remarks:
The file contains technical information submitted after the application was filed and not included in this specification

EP 3 176 187 B2

(52) Cooperative Patent Classification (CPC): (Cont.)

C-Sets
C08F 218/08, C08F 212/08, C08F 220/56,
C08F 220/325, C08F 220/06;
C08F 220/1804, C08F 212/08, C08F 220/56,
C08F 220/325, C08F 220/06;
C08F 220/1804, C08F 220/14, C08F 220/56,
C08F 220/325, C08F 220/06

## Description

The present invention relates to formaldehyde-free aqueous polymeric dispersions containing a triplet of functional monomers that, when submitted to heating, can crosslink, resulting in polymeric films without releasing formaldehyde or other hazardous materials, thus resulting in compositions with improved water and solvent resistance and bonding strength, suitable for applications such as textile coating, nonwovens, fiber bonding, paper coatings and impregnation, curable adhesives, industrial coatings and finishes and related applications. This triplet of functional monomers uses, at least, one amino- (or amido-), one epoxy- or hydroxy-, and one acid-functional monomer combination.

## BACKGROUND OF THE INVENTION

Aqueous polymer dispersions are widely used industrially as bonding agents of many different fibers and other materials, as coating materials or, in general, as binders. These polymers may suffer a considerable loss in adhesion and cohesion after exposure to elements like water, cleaning materials, solvents, and to functional stress like abrasion, folding, tearing, printing, shear, friction, etc., which can be reduced by addition of crosslinking monomers incorporated in the form of polymerized units or externally added compounds, such as selected urea-, melamine-, phenol- or glyoxal-based resins. A customary crosslinking monomer is N-methylol-acrylamide ("NMA"). The N-methylol group of the NMA (or also N-methylol-methacrylamide) can subsequently self-crosslink and thus improve the film strength and cohesion. However, the industrial commercial form of this product may contain up to 2% by weight of free formaldehyde, which is introduced into the dispersions. Formaldehyde is also released during the crosslinking reaction itself, depending on the conditions chosen. Possible mechanisms for this are described in the literature, for example by K. Hubner and F. Kollinsky, Angew. Makromol. Chem. 11, 125-134(1970).

Formaldehyde is a hazardous substance with an irritant and sensitizing effect, and it is also considered to have a carcinogenic potential. In the past, many attempts have therefore been made to develop functional crosslinkable monomers having a similar crosslinking capability as N-methylol-acrylamide (NMA) or N-methylol-methacrylamide, and to use said monomers as functional components in polymer dispersions.

Etherified N-methylol monomers, such as N-methoxy-methyl(meth)acrylamide, N-butoxymethyl(meth)acrylamide and N-isobutoxymethyl(meth)acrylamide, have long been known. However, these monomers do not have the required reactivity for many applications; in particular not in the case of applications where the crosslinking has to take place at similar temperatures and times as the industry uses with conventional NMA based ones. Therefore, these products are not a realistic alternative for many applications.

In DE 33 28 456 and EP 0 080 635 the formaldehyde issue is addressed by adding scavengers to the NMA-containing polymer, such as urea or ethylene urea that can combine with formaldehyde. The presence of these water soluble materials detract from the desired resistance properties of the product without completely preventing ulterior release of formaldehyde.

US 5,021,529 describes formaldehyde-free inter-polymers suitable for the production of impregnated or treated papers, textile and nonwovens. Crosslinking monomers proposed are N-ethylol(meth)acrylamide and -maleimide, N-propylol(meth)acrylamide, N-butylol(meth)acrylamide and -maleimide and N-benzylol(meth)acrylamide. Temperature and time ranges needed for sufficient crosslinking density exceed by far current curing methods.

Aldehyde-functional monomers have been known for a relatively long time and proposed as potential substitutes for NMA. EP 0 003 516 proposes, for example, (meth)acryloxyalkylpropanals as crosslinking agents. These are obtained by esterification of β-hydroxyalkylpropanals. These carbonyl-functional monomers can be crosslinked with polyhydrazines with hydrazide formation. However, US 5,258,477 discloses that the free aldehyde group of such monomers tends toward chain transfer during the polymerization and pre-crosslinks the polymers in this manner. US 4,191,838 describes acrylate and methacrylate esters of 2,2-dimethyl-3-hydroxy-propanaldehyde and US 4,250,070 describes polymers prepared from these aldehyde-containing monomers. The polymers are cured (i.e., crosslinked) with hydrazine-containing derivatives which are known to be toxic.

US 4,281,207 and US 4,225,689 describes vinyl aryl ethers of aromatic phenolic aldehydes. The aryl vinyl ethers are derived from vinyl benzyl chloride and a phenolic aldehyde which is not masked or blocked. This is known to cause problems during polymerization and copolymerization.

US 4,476,182 describes formaldehyde-free acrylate dispersions having hydroxyl and carboxyl groups useful as binders in non-woven materials. Although these systems can achieve good mechanical values, the cleanability and resistance towards organic solvents is insufficient, requiring external crosslinking agents, such as, for example, glyoxal, in order to achieve good stability during cleaning.

US 5,258,477, tries to overcome these technical disadvantage by masking the aldehyde monomers as acetals. Here, numerous structures based on crotonic, maleic, fumaric or itaconic acid esterified with 2,2-dimethyl-3-hydroxypropanal are proposed. These esters are reacted with mono- or di-functional alcohols to give open or cyclic acetals. Emulsion polymers with these acetal monomers are proposed, for instance, to improve the wet strength of paper. Acetals monomers based on (meth)acrylate or (meth)acrylamide are used together with selected cationic monomers in WO-A-98/54,237. The acetals N-(2,2-dimethoxyethyl)-N-methylacrylamide and 3,3-dimethoxy-1-methylethyl acrylate may be mentioned by way of example.

US2012/0156467 discloses a formaldehyde-free binder system for particulate and/or fibrous substrates comprising a curable polymer composition obtained by polymerizing from 0.1 to 5% by weight of at least one monomer selected from the group consisting of acrylamide, and methacrylamide (monomer A1); from 0.1 to 15% by weight of at least one ethylenically unsaturated $C_3$- to $C_6$- mono- or dicarboxylic acid (monomer A2); from 0.1 to 10% by weight of at least one ethylenically unsaturated compound which has at least one oxiranyl or one oxetanyl group (monomer A3); and from 70 to 99.7% by weight of at least one other ethylenically unsaturated compound which is copolymerizable with the monomers A1 to A3 (monomer A4).

Emulsion polymers based on vinyl esters, are usually neutral or rendered slightly acidic in many textile and paper applications. In this environment, the acetals undergo a slow irreversible hydrolysis with release of the reactive aldehydes, so that those groups are no longer available for the end application, leading to unstable recipes and increased presence of hazardous materials and VOC.

There is therefore still a need on the market for newer functional co-monomers combinations which are suitable for the preparation of crosslinkable polymers which effectively crosslink, in particular from emulsion, without release of formaldehyde, and without having the disadvantages of the systems of the prior art.

## DETAILED DESCRIPTION OF THE INVENTION

The present invention relates to the production of curable polymers that can effectively crosslink at conventional industrial temperatures (from 120 to 180 °C) in very short times (from a few minutes to less than one minute) resulting in films and bonded materials that exhibit water and solvent resistance and bonding strength comparable to those which conventionally employ N-methylol-acrylamide ("NMA") without containing or releasing formaldehyde.

Thus, according to the present invention, there is provided a curable polymer composition comprising the following monomer constituents:

1. (a) from 0.5 to 10% of a nitrogen-functional monomer where the N atom in the monomer side chain is linked to hydrogen or any other substitution groups, excluding hydroxyalkyl groups and any reaction products or condensates of aldehydes with amino- or amido-functional monomers, said nitrogen-functional monomer being selected from methacrylamide, acrylamide, N,N-dimethylaminoethylacrylate or 3-dimethylaminopropylmethacrylate,
2. (b) from 0.5 to 10% of an oxygen-functional monomer, where the O atom in the monomer side chain is single-bonded to either one or two carbon atoms of that side chain, said oxygen-functional monomer being selected from hydroxyethyl methacrylate or glycidyl methacrylate,
3. (c) from 0.5 to 10% of an acid-functional monomer or its salts, said acid-functional monomer being selected from itaconic acid, and
4. (d) from 70% up to 98.5% of one or more other ethylenically unsaturated monomers different from any one of above (a), (b) and (c) but capable of copolymerizing with any of the functional monomers (a), (b) and (c), to build up the polymeric backbone, where all percentages are based on the total amount of monomers that constitute the final polymeric composition (w/w) and the monomers add up to 100%, wherein monomer (d) is comprised of butyl acrylate/styrene, or vinyl acetate/butyl acrylate, or butyl acrylate/methylmethacrylate, or solely ethyl acrylate.

The polymer compositions of the present invention contain a specific combination of three ethylenically unsaturated functional monomers ("the Triplet") that are copolymerized with other ethylenically unsaturated conventional monomers constituting the main polymeric backbone. A functional monomer is here defined as a monomer that contains a functional chemical group other than the ethylenically unsaturated moiety. The members of the triplet can be incorporated into any polymeric backbone depending on the intended use of the final product. The triplet, according to the present invention, is composed of:

1. (a) from 0.5 to 10% of a nitrogen-functional monomer where the N atom in the monomer side chain is linked to hydrogen or any other substitution groups, excluding hydroxyalkyl groups and any reaction products or condensates of aldehydes with amino- or amido-functional monomers, said nitrogen-functional monomer being selected from methacrylamide, acrylamide, N,N-dimethylaminoethylacrylate or 3-dimethylaminopropylmethacrylate,
2. (b) from 0.5 to 10% of an oxygen-functional monomer, where the O atom in the monomer side chain is single-bonded to either one or two carbon atoms of that side chain, said oxygen-functional monomer being selected from hydroxyethyl methacrylate or glycidyl methacrylate,
3. (c) from 0.5 to 10% of an acid-functional monomer or its salts, said acid-functional monomer being selected from itaconic acid.

The polymer compositions of the present invention further contains from 70% up to 98.5% of other ethylenically unsaturated monomers (monomer d), different from any one of above (a), (b) and (c), to build up the polymeric backbone, wherein monomer (d) is comprised of butyl acrylate/styrene, or vinyl acetate/butyl acrylate, or butyl acrylate/methylmethacrylate, or solely ethyl acrylate.

All percentages are based on the total amount of monomers that constitute the final polymeric composition (w/w).

As used herein, acrylate and methacrylate are referred to as "(meth)acrylate," acrylic acid and methacrylic acid are referred to as "(meth)acrylic acid."

The compositions of the present application are obtained by using conventional polymerization techniques. The triplet components can be incorporated together into the monomer emulsion, separately at different times of the monomer blend, or into different monomer mixes added to the same reaction medium, or *via* blending different polymers containing them and ending up together in the same final product.

Within the other ethylenically unsaturated monomers (monomer d), the above mentioned monomers are as a rule the main monomers. The monomers should preferably be chosen so that the copolymer has the appropriate hardness for the intended application. According to Fox, (T. G. Fox, Bull. Am. Phys. Soc. (Ser. II) 1, 123 [1956]), the glass transition temperature (Tg) of copolymers is given to a good approximation by the Fox equation. Using this tool or similar mathematical models, the monomers (d) are combined as to get the appropriate Tg for the intended use as, for instance, fiber bonding material, textile printing binder, curable adhesives, paper saturants and/or coatings.

In an embodiment of the present invention, besides said monomers (d) which are as a rule the main monomers to be polymerized by the free radical aqueous polymerization, auxiliary monomers (d') which can modify the properties in a targeted manner, can be concomitantly used in the polymerization. Such auxiliary monomers (d') are usually incorporated as modifying monomers in amounts, based on the total amount of the monomer (d), of less than 50% by weight, as a rule of less than 20, preferably of less than 10, % by weight, wherein monomers (d) and monomers (d') if present amounts to 70% up to 98.5% relative to the total amount of monomers that constitute the final polymeric composition. These monomers (d') may contribute to further stabilize the aqueous dispersions, to improve the film cohesion or other properties by crosslinking during the polymerization or during the film formation and/or react by a suitable functionality with other formulation components with or without crosslinking.

Examples of these auxiliary monomers (d') are monomers having two or more vinyl radicals, monomers having two or more vinylidene radicals and monomers having two or more alkenyl radicals. The diesters of dihydric alcohols with $\alpha$, $\beta$-monoethylenically unsaturated monocarboxylic acids, among which acrylic and methacrylic acid are preferred, the diesters of divalent carboxylic acids with ethylenically unsaturated alcohols, other hydrocarbons having two ethylenically unsaturated groups or the diamides of difunctional amines with $\alpha$, $\beta$-monoethylenically unsaturated monocarboxylic acids are particularly advantageous.

Examples of such monomers having two non-conjugated ethylenically unsaturated double bonds are alkylene glycol diacrylates and dimethacrylates, such as ethylene glycol diacrylate, 1,2-propylene glycol diacrylate, 1,3-propylene glycol diacrylate, 1,3-butylene glycol diacrylate, 1,4-butylene glycol diacrylates or - methacrylates and ethylene glycol diacrylates or -methacrylates, 1,2-propylene glycol dimethacrylate, 1,3-propylene glycol dimethacrylate, 1,3-butylene glycol dimethacrylate, 1,4-butylene glycol dimethacrylates, hexanediol diacrylate, pentaerythrityl diacrylate, and divinylbenzene, vinyl methacrylate, vinyl acrylate, vinyl crotonate, allyl methacrylate, allyl acrylate, diallyl maleate, diallyl fumarate, diallyl phthalate, cyclopentadienyl acrylate, divinyl adipate or methylenebisacrylamide.

However, it is also possible to use monomers having more than two double bonds, for example tetraallyloxyethane, trimethylolpropane triacrylate or triallyl cyanurate.

A further group of auxiliary monomers (d') comprises those which are crosslinkable or self-crosslinking via carbonyl groups. Examples are di-acetone acrylamide, allyl acetoacetate, vinyl acetoacetate and acetoacetoxyethyl acrylate or methacrylate.

A further group of auxiliary monomers (d') comprises monomers containing silane groups, e.g. vinyltrialkoxysilanes, such as vinyltrimethoxysilane, vinyltriethoxysilane, alkylvinyldialkoxysilanes or (meth)acryloyloxy-alkyltrialkoxysilanes, e.g. (meth)acryloxyethyl-trimethoxysilane or (meth)acryloxypropyltrimethoxy-silane.

In addition to the triplet and monomers (d) (and (d') if present) constituting the copolymer, the aqueous dispersions according to the invention preferably contain protective colloids and/or surfactants. These are compounds which are typically present during polymerization and contribute to facilitate the process and stabilize the final product. These can also be used as post-additives, after polymerization.

Suitable protective colloids are, for example, polyvinyl alcohols, polyalkylene glycols, alkali metal salts of polyacrylic acids and polymethacrylic acids, cellulose, starch and gelatin derivatives or polymers derived from acrylic acid, methacrylic acid, maleic acid, maleic anhydride, methyl vinyl ether, styrene, 2-acrylamido-2-methylpropanesulfonic acid and/or 4-styrenesulfonic acid and the alkali metal salts thereof, but also polymers derived from N-vinyl-pyrrolidone, N-vinylcaprolactam, N-vinylcarbazole, 1-vinylimidazole, 2-vinylimidazole, 2-vinylpyridine, 4-vinylpyridine, acrylamide, methacrylamide, amine group-carrying acrylates, methacrylates, acrylamides and/or methacrylamides. A detailed description of further suitable protective colloids is to be found in Houben-Weyl, Methoden der organischen Chemie, Vol.

XIV/1, Makromolekulare Stoffe [Macromolecular Compounds], Georg-Thieme-Verlag, Stuttgart, 1961, pages 411 to 420.

In addition to, or instead of, the protective colloids, the aqueous dispersion may also be stabilized with emulsifiers. Suitable emulsifiers are all commercial ionic and nonionic emulsifiers. Particularly preferred examples are: ethoxylated fatty alcohols and also alkali metal and ammonium salts of long-chain alkyl sulfates ($C_8$-$C_{12}$-alkyl radical), of sulfuric monoesters of ethoxylated alkanols and ethoxylated alkylphenols, of alkylsulfonic acids and of alkylarylsulfonic acids. A list of suitable emulsifiers is to be found, for instance, in Houben-Weyl, Methoden der organischen Chemie, Vol. XIV/I, Makromolekulare Stoffe, Georg-Thieme-Verlag, Stuttgart, 1961, pages 192-208.

The proportion of the emulsifiers may be up to 10% by weight, based on the solids content of the aqueous dispersion. Emulsifiers may already be present during the polymerization and/or may be added thereafter.

Additionally, and particularly in aqueous polymerization, pH regulators may be used. These compounds are typically weak acids, weak bases or salts. Examples are acetic acid, sodium acetate, sodium carbonate and the like. Neutralizing agents as caustic soda or ammonia can also be used. Typically, pH values of the products of the present invention range from 2.5 to 10.

The preparation of the aqueous dispersions can be effected by the customary continuous or batch-wise free radical polymerization procedures. Aqueous radical polymerization is a very well-known technique that has sufficiently been described in the past and of which abundant publications are available (cf. for example, Encyclopedia of Polymer Science and Engineering, Vol. 8, pages 659 to 677, John Wiley & Sons, Inc., 1987; D. C. Blackley, Emulsion Polymerisation, pages 155 to 465, Applied Science Publishers, Ltd., Essex, 1975; D. C. Blackley, Polymer Latices, 2nd Edition, Vol. I, pages 33 to 415, Chapman & Hall, 1997; H. Warson, The Applications of Synthetic Resin Emulsions, pages 49 to 244, Ernest Bonn Ltd., London, 1972; D. Diederich, Chemie in unserer Zeit 1990, 24, pages 135 to 142, Verlag Chemie, Weinheim; J. Piirma, Emulsion Polymerisation, pages 1 to 287, Academic Press, 1982; F. Holscher, Dispersionen synthetischer Hochpolymerer [Dispersions of Synthetic High Polymers], pages 1 to 160, Springer-Verlag, Berlin, 1969, etc.) It is usually effected in such a way that the ethylenically unsaturated monomers are dispersed in an aqueous medium, frequently with the concomitant use of dispersants, and are polymerized by means of at least one free radical polymerization initiator. Water-soluble and/or oil-soluble initiator systems, such as peroxodisulfates, azo compounds, hydrogen peroxide, organic hydroperoxides or dibenzoyl peroxide, are used here. These may be used either by themselves (thermal reaction process) or in combination with reducing compounds, such as Fe(II) salts, sodium pyrosulfite, sodium hydrogen sulfite, sodium sulfite, sodium dithionite, sodium formaldehyde sulfoxylate, ascorbic acid, as a redox catalyzed reaction system. Additionally, polymerization inhibitors may be used in small amounts (smaller than the catalyst system in use) before the start of the polymerization reaction and /or in the preparation of the monomer system to prevent premature or undesired side reactions.

Additionally, other additives may be used during or after polymerization to further enhance other properties or help processing and handling. Amongst them are silane and siloxane compounds, silicone oils and dispersions, defoamers, rheology modifiers and thickening agents, external crosslinking agents like polyaziridines or isocyanates, etc.

Typically, polymerization temperatures for the processes here range from 50°C to 100°C, more preferably from 60°C to 90°C.

The products of the present invention result in curable polymer films that can effectively crosslink at conventional industrial temperatures (from 120 to 180°C) in very short times (from a few minutes to less than one minute) resulting in films and bonded materials that exhibit water and solvent resistance and bonding strength comparable to those which conventionally employ N-methylolacrylamide, but without containing or releasing formaldehyde.

The invention is described in more detail, but not limited to the following examples and tables. The parts and percentages stated in the examples are based on weight unless otherwise stated and the monomer parts are percentage based on the total amount of monomer being present.

## EXAMPLES

### 1) Acetone test

This method is used to measure the degree of crosslinking in a cured polymer film. It is based on the fact that acrylic, styrene-acrylic and vinyl-acrylic (co)-polymer systems are swellable, partially soluble or totally soluble in acetone when not crosslinked.

The liquid polymer dispersion is poured in a bar that has around 0.5 cm thickness and dried at room temperature for two days. A 0.5 g square sample is cut from dried polymer, cured at 150°C oven for four minutes and cooled at room temperature. 50 g acetone and cured polymer sample are added in a glass jar and covered for sixteen hours at room temperature. The solution is filtered using a 325 mesh filter to remove the excess acetone from the sample and the measured weight of the sample with the filter is taken. The filter with the polymer sample is dried in a 60°C oven for eight hours and the weight is measured thereafter.

M1: weight of polymer sample, 0.5g
M2: weight of filter
M3: weight of polymer sample and filter after filtration of acetone
M4: weight of polymer sample and filter after drying at 60°C

$$\% \text{ Reticulation} = [(M4\text{-}M2)/M1]*100$$

$$\text{Swelling index} = (M3\text{-}M2)/M1$$

Polymers in the acetone test table below have been produced using very different monomer (d) combinations. The given abbreviations are as follows:

BA: butyl acrylate
STY: styrene
VAM: vinyl acetate
EA: ethyl acrylate
MMA: methylmethacrylate

Within the same combination, monomers (d) ratio has been kept constant in order to produce polymers with very similar Tg's and very similar hydrophilic/hydrophobic balance. The main variables are the presence of NMA in the comparative examples and the full or partial presence of the triplet components in the other ones.

As it can be seen in the Acetone test table below, a hydrophobic Sty/BA standard (std) composition (containing 3% NMA) gives a swelling/reticulation index of 5/85 and very good resistance to acetone. Comparatively, a similar composition without NMA (Trial 43 ("na" stands for not analyzed)) shows no reticulation and dissolves completely in acetone. Trials 38 and 42, with uncompleted triplets show measurable degrees of reticulation, but clearly underperforming the standard product with NMA. However, Trials 11 and 24 with complete triplets perform very similarly to the NMA-containing standard and, even more remarkably, trials 25 and 4 overperform the standard NMA containing one.

Trials 38, 42, 4, 11, 24, 25, 17, 35, 34, 21, 20 and 22 are not according to the invention.

| Acetone Test | | | | | | | | |
|---|---|---|---|---|---|---|---|---|
| Trial number | Monomer Composition | N-Methyol-Acrylamide (NMA) | Triplet | | | Swelling Index | Reticulation % | Polymer sample in Acetone |
| | | | Acrylamide MethAcrylamide* | GlyMa HEMA* | MAA IA* | | | |
| std | BA+ STY | 3 | | 0 | 2 | 5 | 85 | keep shape |
| 43 | BA+ STY | 0 | 0 | 0 | 2.5* | na | 0 | dissolved |
| 38 | BA+ STY | 0 | 0 | 3 | 2 | 20 | 68 | swollen |
| 42 | BA+ STY | 0 | 3 | 3* | 0 | 8.7 | 70 | keep shape |
| 4 | BA + STY | 0 | 3 | 3 | 3 | 4 | 91 | keep shape |
| 11 | BA+ STY | 0 | 3 | 3* | 3 | 6.5 | 83 | keep shape |
| 24 | BA + STY | 0 | 3 | 1.5/1.5* | 3 | 6 | 84 | keep shape |
| 25 | BA+ STY | 0 | 3* | 3 | 3 | 5 | 89 | keep shape |
| std | VAM+BA | 2.3 | 0 | 0 | 0 | 17 | 55 | swollen |
| 17 | VAM+BA | 0 | 3 | 3 | 2 | 7.5 | 83 | keep shape |
| std | EA | 4.3 | 0 | 0 | 0 | 5 | 92 | keep shape |
| 35 | EA | 0 | 4 | 0 | 2 | 25 | 53 | swollen |
| 34 | EA | 0 | 3 | 3 | 1 | 8.5 | 83 | keep shape |
| 21 | BA+MMA | 0 | 3 | 0 | 0 | 7 | 77.5 | keep shape |
| 20 | BA+MMA | 0 | 3 | 2* | 2 | 7 | 83 | keep shape |
| 22 | BA+MMA | 0 | 3 | 3 | 2 | 5 | 92 | keep shape |

**2) Mechanical properties (Tensile/Elongation)**

The liquid polymer dispersion is poured in a bar that has around 5 mm thickness and dried at room temperature for two days. A 0.1 cm x 1 cm x 10 cm sample is cut from the dried polymer, cured at 150°C in an oven for 4 minutes and cooled at room temperature.

The specimens are then placed in a Zwick Roell Z 050 pre-calibrated tensile test machine. Computer with data acquisition system is also connected with the testing machine and all testing procedures and analysis are controlled and calculated using Zwick testXpert® software. The tests are performed at 300 mm/min speed.

Trials 43, 42, 4, 11, 25, 16, 48, 17 and 34 are not according to the invention.

**Table of Mechanicals: Tensile/Elongation**

| Trial number | Monomer Composition | N-Methylol-Acrylamide (NMA) | **Triplet** | | | Tensile mPa | Elongation % |
|---|---|---|---|---|---|---|---|
| | | | Acrylamide MethAcrylamide* | GlyMA HEMA* | MAA IA* | | |
| std | BA + STY | 3 | 0 | 0 | 2 | 1.5 | 750 |
| 43 | BA + STY | 0 | 0 | 0 | 2.5* | 0.22 | 2324 |
| 42 | BA + STY | 0 | 3 | 3* | 0 | 0.13 | >4000 no break |
| 4 | BA + STY | 0 | 3 | 3 | 3 | 1.70 | 900 |
| 11 | BA + STY | 0 | 3 | 3* | 3 | 1.15 | 1600 |
| 25 | BA + STY | 0 | 3* | 3 | 3 | 2.5 | 930 |
| std | VAM+BA | 2.3 | 0 | 0 | 0 | 0.35 | >4000 no break |
| 16 | VAM+BA | 0 | 3 | 0 | 0 | 0.35 | >4000 not break |
| 48 | VAM+BA | 0 | 3 | 2 | 1 | 1.55 | 3200 |
| 17 | VAM+BA | 0 | 3 | 3 | 2 | 1.5 | 1000 |
| std | EA | 4.30 | 0 | 0 | 0 | 1.65 | 830 |
| 34 | EA | 0 | 3 | 3 | 1 | 1.55 | 1460 |
| 36 | EA | 0 | 3 | 3 | 1* | 1.75 | 1850 |

Tensile/elongation profile of a polymer film is heavily influenced by the degree of crosslinking. An increase in crosslinking density is expected to result in higher tensile strength and lower elongation values. High tensile strength is desired in many applications where high cohesion values are needed to allow the final product to keep integrity and shape under stress. Conversely, a strong reduction in elongation is not desired since in many applications (textile, paper, coatings, etc.) elasticity and flexibility are very much desired.

As it can be seen in the table, compositions 43 and 42 exhibit low tensile modulus and extreme elongation values, as expected from un-crosslinked styrene-acrylic copolymers. The standard BA/STY in the table, crosslinked via 3% NMA on total monomer, shows a modulus 7 or 10 times higher than trials 43 and 42. Trials 4, 11 and 25 show not only comparable values but even better ones than the standard BA/STY.

Even more outstanding results are obtained when VAM copolymers are considered, because, in accordance with results shown in the table, even the conventionally NMA crosslinked standard (std) VAM/BA shows a poor modulus value of 0.35 coupled with excessive elongation, comparable to those values obtained in comparative trial 16. Trials 48 and 17 show modulus values 5 times better and much more appropriate elongation values.

**3) Washing resistance**

Textile printing is the process of applying color to fabric in definite patterns or designs. The color is bonded with the fiber by polymer-crosslinking. High crosslinking between polymer, fiber and color gives resistance to washing and friction.

The pigment printing paste is prepared as follows: 83.6 parts of deionized water, 15 parts of polymer dispersion and 1.4 parts of alkali swellable thickener (Orgaclear P 460, Organik Kimya Co. Istanbul-Turkey) are added to a metal jar with a stirrer. 0.7 parts of ammonia solution is added drop by drop to the jar and stirred around 15 minutes. 0.5 parts of blue pigment dispersion ORGAPRIN N. BLUE BN (Organik Kimya Co. Istanbul-Turkey) is added to the paste. The final viscosity of the paste is adjusted to approx. 20000 mPa·s.

The paste is applied on the fabric by screen printing method whereby a mesh is used to transfer the pigment paste onto a cotton fabric. The screen is placed atop a cotton fabric, the pigment paste is placed on top of the screen, and a flood bar is used to push the pigment paste through the holes in the mesh. The cotton fabric is dried at 100°C for 5 minutes and cured at 160°C for 3 minutes.

The washing resistance test is applied at 60°C for 2 hours x 5 cycles using a domestic washing machine. Color change is checked after washing and rated as follows:

5: no color change
4: small color change
3: medium color change
2: significant color change
1: excessive color change
0: color is (almost) completely washed out

Trials 42, 4, 11, 24, 16, 17, 32, 21 and 22 are not according to the invention.

| **Washing Resistance results** | | | | | | |
|---|---|---|---|---|---|---|
| Trial number | Monomer Composition | N-Methylol-Acrylamide (NMA) | **Triplet** | | | Washing Resistance |
| | | | Acrylamide Methacrylamide | GlyMA HEMA* | MAA IA* | |
| Std | BA + STY | 3 | 0 | 0 | 2 | 5.0 |
| 42 | BA + STY | 0 | 3 | 3* | 0 | 1.0 |
| 4 | BA + STY | 0 | 3 | 3 | 3 | 5.0 |
| 11 | BA + STY | 0 | 3 | 3* | 3 | 4.5 |
| 24 | BA + STY | 0 | 3 | 1.5/1.5* | 3 | 4.5 |
| std | VAM+BA | 2.3 | 0 | 0 | 0 | 5.0 |
| 16 | VAM+BA | 0 | 3 | 0 | 0 | 1.0 |
| 17 | VAM+BA | 0 | 3 | 3 | 2 | 5.0 |
| 32 | EA | 0 | 4 | 0 | 0 | 0.0 |
| 36 | EA | 0 | 3 | 3 | 1* | 4.0 |
| 21 | BA+MMA | 0 | 3 | 0 | 0 | 1.0 |
| 22 | BA+MMA | 0 | 3 | 3 | 2 | 4.5 |

The table above compiles examples to illustrate machine-washing resistance values. Conventional NMA crosslinked polymers show very good values both in hydrophobic (STY/BA) and hydrophilic (VAM/BA) compositions. Trials where the triplet is uncompleted (42, 16, 32, 21), show very poor values, like 0 or 1. Trials 4, 11, 24, 17 and 22 exhibit results comparable to those of the NMA crosslinked ones.

**4) Additional water absorption tests were conducted on paper:**

**4.1 Cobb Test**

200 grams of liquid polymer dispersion and 200 grams of deionized water are poured in a small bath. An untreated paper sample is dipped into the bath, let rest for 30 seconds, then is taken out from the bath and applied through a foulard machine by 35 kg/cm and speed 3. The wet paper sample is cured 2 minutes at 140°C and cooled at room temperature. A 12.5 cm x 12.5 cm sample is cut from the cured paper and weighted. The sample is placed into a Cobb test apparatus. 100 cc of deionized water is poured onto the paper sample and waited for 45 seconds. The cured paper sample is then taken out and the excess water is dried with filter paper using a bar for one cycle. This last sample is weighted.

M1: dry paper weight
M2: wet paper weight

$$\text{Water Absorption} = \text{Cobb} = (M2 - M1) \times 100 \ g/cm^2$$

**4.2 Water test on paper block**

The liquid polymer dispersion is adjusted to 35% solid content with deionized water. 400 grams of this solution is poured in a small bath. A sample of untreated paper is dipped into the bath, let rest for 45 seconds and put on a silicon surface. Then, a second paper sample is dipped to bath for 45 seconds and put onto the first paper. The same procedure is repeated for 20 papers. The thus prepared paper block is dried at 70°C for 24 hours, cured at 150°C for 30 minutes and cooled at room temperature.

The paper block is weighted as dry and put in a water bath for 3 days. Then it is taken out from the bath and weighted as wet. Water absorption is calculated as in the Cobb test.

| Water Resistance/absortion test on Paper | | | | | | | | | |
|---|---|---|---|---|---|---|---|---|---|
| R&D Trial number | Monomer Composition | solid % | Tg (°C) | n-MOA | Triplet | | | Cobb test (gsm) | Water Uptake on 20 sheet paper (%) |
| | | | | | Acrylamide | GlyMA HEMA* | MAA | | |
| BL383 | BA + STY | 50.0 | 24 | 2 | 0 | 0 | 3 | 23 | 20.3 |
| 27 | BA + STY | 50.0 | 25 | 0 | 3 | 3 | 3 | 16 | 13.8 |
| 28 | BA + STY | 50.0 | 25 | 0 | 3 | 3* | 3 | 30 | 12.8 |

Upon changing the conditions of the test and using paper as substrate, a commercial paper impregnation binder (Orgal BL383 from Organik Kimya, Istanbul) containing NMA is compared with trials 27 and 28 of similar composition and Tg, where NMA has been removed. Trials 27 and 28 are not according to the invention.

**5) Dry Cleaning / Solvent resistance**

The test is conducted on the same blue-printed fabric produced in the Washing resistance test (3). A 4 cm x 10cm sample is cut from the blue-printed fabric and is attached to a similar piece of colorless, untreated fabric. This fabric sandwich sample is put in a bath containing 200 grams of perchloroethylene (tetrachloroethylene). The bath is rotated at 25°C for 30 minutes. Color transfer from the blue printed fabric to the colorless untreated fabric is checked and evaluated as follows:

5: no color transfer
4: small/ghostly color transfer
3: visible color transfer
2: significant color transfer
1 : A lot of color transfer
0: color is totally transferred and distributed almost equally in both fabric specimens.

| Dry Cleaning/Solvent Resistance | | | | | | |
|---|---|---|---|---|---|---|
| R&D Trial number | Monomer Composition | N-Methyol Acrylamide (NMA) | Triplet | | | Dry Cleaning Solvent Resistance |
| | | | Acrylamide | GlyMA HEMA* | MAA IA* | |
| std | VAM+BA | 2.30 | - | - | - | 3.5 |

(continued)

| Dry Cleaning/Solvent Resistance | | | | | | |
|---|---|---|---|---|---|---|
| R&D Trial number | Monomer Composition | N-Methyol Acrylamide (NMA) | Triplet | | | Dry Cleaning Solvent Resistance |
| | | | Acrylamide | GlyMA HEMA* | MAA IA* | |
| 16 | VAM+BA | - | 3 | - | - | 1.0 |
| 17 | VAM+BA | - | 3 | 3 | 2 | 5.0 |
| std | BA+STY | 3.00 | - | - | 2 | 5.0 |
| 55 | BA+STY | - | 3 | - | - | 2.0 |
| 43 | BA+STY | - | - | - | 2.5* | 1.0 |
| 3 | BA+STY | - | 3 | 3 | 2 | 5.0 |
| 21 | BA+MMA | - | 4.3 | - | - | 2.0 |
| 22 | BA+MMA | - | 3 | 3 | 2 | 5.0 |

Trials 16, 17, 55, 43, 3, 21 and 22 are not according to the invention.

The results show again that un-crosslinked trials 16, 43, 55, and 21 fail by large the test, whereas trial 3 passes the test perfectly well as its standard (std) NMA containing counterpart (Trial 3 vs. std BA/STY). The effect is even more remarkable in VAM compositions where trial 17 clearly over performs its conventional counterpart NMA containing std VAM/BA. Trials 21 and 22 further illustrate the effect of the triplet in a straight MMA/BA composition.

Although any triplet combination in accordance with the present invention should not release *per se*, or contribute to any formaldehyde release, a few comparative samples from the ones referred herein, were sent to an independent laboratory, Intertek Co., certified for carrying formaldehyde detection following BS EN ISO 14184 - 1/2011 procedure. Results are shown in the following table, confirming the aforementioned expectations. Trials 3, 10 and 17 are not according to the invention.

| Formaldehyde : BS EN ISO 14184 - 1/2011 | | | | | | |
|---|---|---|---|---|---|---|
| Trial number | Monomer Composition | N-Methyol Acrylamide (NMA) | Triplet | | | Formaldehyde amount detected on fabric (80 g/m$^2$ coated) |
| | | | Acrylamide | GlyMA HEMA* | MAA | |
| Blank (untreated fabric) | | | | | | 4 ppm |
| std | BA + STY | 3.00 | 0 | 0 | 2 | 26 ppm |
| 3 | BA + STY | 0.00 | 3 | 3 | 2 | 3 ppm |
| 10 | BA + STY | 0.00 | 3 | 3* | 2 | <2 ppm |
| std | VAM+BA | 2.30 | 0 | 0 | 0 | 12 ppm |
| 17 | VAM+BA | 0.00 | 3 | 3 | 2 | 4 ppm |

The products obtainable by the present invention as it can be inferred from the enhancement of properties here described can be used in multiple applications such as textile binders, paper coatings and saturants, industrial coatings, fiber bonding materials like for wood fibers (MDF), cellulose fibers, synthetic fibers, thermally curable adhesives and the like.

## Claims

**1.** A curable polymer composition comprising the following monomer constituents:

(a) from 0.5 to 10% of a nitrogen-functional monomer where the N atom in the monomer side chain is linked to hydrogen or any other substitution groups, excluding hydroxyalkyl groups and any reaction products or condensates of aldehydes with amino- or amido-functional monomers, said nitrogen-functional monomer being selected from methacrylamide, acrylamide, N,N-dimethylaminoethylacrylate or 3-dimethylaminopropylmethacrylate,
(b) from 0.5 to 10% of an oxygen-functional monomer, where the O atom in the monomer side chain is single-bonded to either one or two carbon atoms of that side chain, said oxygen-functional monomer being selected from hydroxyethyl methacrylate or glycidyl methacrylate,
(c) from 0.5 to 10% of an acid-functional monomer or its salts, said acid-functional monomer being selected from itaconic acid, and
(d) from 70% up to 98.5% of one or more other ethylenically unsaturated monomers different from any one of above (a), (b) and (c) but capable of copolymerizing with any of the functional monomers (a), (b) and (c), to build up the polymeric backbone, where all percentages are based on the total amount of monomers that constitute the final polymeric composition (w/w) and the monomers add up to 100%, wherein monomer (d) is comprised of butyl acrylate/styrene, or vinyl acetate/butyl acrylate, or butyl acrylate/methylmethacrylate, or solely ethyl acrylate.

**2.** The curable polymer composition according to claim 1, wherein monomer (a) is selected from from methacrylamide or acrylamide, more preferably acrylamide.

**3.** The curable polymer composition according to claim 1 or 2, wherein the ranges of the three monomer constituents (a), (b) and (c) are from 1.0% to 5.0% based on the total amount of monomers employed.

**4.** A method for producing the curable polymer composition according to any one of claims 1 to 3, comprising the step of polymerizing the monomer constituents (a), (b), (c) and (d) by a free radical emulsion polymerization process.

**5.** The method according to claim 4, wherein the monomer constituents (a), (b) and (c) are copolymerized in a single process or a multi-staged process.

**6.** The method according to claim 4, wherein the monomer constituents (a), (b) and (c) are copolymerized with monomer(s) (d) in separate polymerization operations, coming together via blending or compounding prior or during the application of the resulting product of the curable polymer composition.

**7.** A product obtainable by the method according to any one of claims 4 to 6.

**8.** The product according to claim 7 which is a curable film.

**9.** Cured product or film obtained by crosslinking the product or film according to claim 7 or 8 at temperatures in the range of 120-180°C.

## Patentansprüche

**1.** Härtbare Polymerzusammensetzung, umfassend die folgenden Monomerkonstituenten:

(a) von 0,5 bis 10% eines Stickstoff-funktionalen Monomers, wobei das N-Atom in der Monomerseitenkette an Wasserstoff oder jedwede anderen Substitutionsgruppen geknüpft ist, ausgeschlossen Hydroxyalkylgruppen und jedwede Reaktionsprodukte oder Kondensate von Aldehyden mit Amino- oder Amido-funktionalen Monomeren, wobei das Stickstoff-funktionale Monomer aus Methacrylamid, Acrylamid, N,N-Dimethylaminoethylacrylat oder 3-Dimethylaminopropylmethacrylat ausgewählt ist,
(b) von 0,5 bis 10% eines Sauerstoff-funktionalen Monomers, wobei das O-Atom in der Monomerseitenkette einfach gebunden ist an entweder ein oder zwei Kohlenstoffatome der Seitenkette, wobei das Sauerstoff-funktionale Monomer aus Hydroxyethylmethacrylat oder Glycidylmethacrylat ausgewählt ist,
(c) von 0,5 bis 10% eines Säure-funktionalen Monomers oder dessen Salze, wobei das Säure-funktionale Monomer aus Itaconsäure ausgewählt ist, und
(d) von 70% bis zu 98,5% von einem oder mehreren anderen ethylenisch ungesättigten Monomeren, verschieden von jedweden von vorstehenden (a), (b) und (c), aber befähigt mit jedem der funktionalen Monomere (a), (b) und (c) copolymerisiert zu werden, um das polymere Rückgrat aufzubauen, wobei sämtliche Prozentangaben auf der Gesamtmonomermenge basieren, welche die finale Polymerzusammensetzung (Gew.-%/Gew.-%) konstituieren, und sich die Monomere auf 100% aufaddieren, wobei Monomer (d) aus Butylacrylat/Styrol oder Vinylacetat/Butylacrylat oder Butylacrylat/Methylmethacrylat oder einfach Ethylacrylat aufgebaut ist.

**2.** Härtbare Polymerzusammensetzung gemäß Anspruch 1, wobei Monomer (a) aus Methacrylamid oder Acrylamid, vorzugsweise Acrylamid, ausgewählt ist.

**3.** Härtbare Polymerzusammensetzung gemäß Anspruch 1 oder 2, wobei die Bereiche der drei Monomerkonstituenten (a), (b) und (c) von 1,0% bis 5,0%, bezogen auf die Gesamtmenge an eingesetzten Monomeren, sind.

**4.** Verfahren zur Herstellung der härtbaren Polymerzusammensetzung gemäß einem der Ansprüche 1 bis 3, umfassend den Schritt des Polymerisierens der Polymerkonstituenten (a), (b) (c) und (d) durch ein radikalisches Emulsionspolymerisationsverfahren.

**5.** Verfahren gemäß Anspruch 4, wobei die Monomerkonstituenten (a), (b) und (c) in einem Einzelverfahren oder einem mehrstufigen Verfahren copolymerisiert werden.

**6.** Verfahren gemäß Anspruch 4, wobei die Monomerkonstituenten (a), (b) und (c) mit Monomer(en) (d) in getrennten Polymerisationsvorgängen copolymerisiert werden, zusammenkommend mittels Mischen oder Compoundieren vor oder während der Anwendung des resultierenden Produkts der härtbaren Polymerzusammensetzung.

**7.** Produkt erhältlich durch das Verfahren gemäß einem der Ansprüche 4 bis 6.

**8.** Produkt gemäß Anspruch 7, welcher ein härtbarer Film ist.

**9.** Gehärtetes Produkt oder Film, erhalten durch Vernetzen des Produkts oder Films gemäß Anspruch 7 oder 8 bei Temperaturen in dem Bereich von 120-180°C.

## Revendications

**1.** Composition polymère durcissable, comprenant les constituants monomères suivants :

(a) de 0,5 à 10% d'un monomère à fonction azotée, où l'atome N dans la chaine latérale du monomère est lié à un hydrogène ou à tout autre groupe de substitution, à l'exclusion des groupes hydroxyalkyle et de tout produit de réaction ou condensat d'aldéhyde avec des monomères à fonction amino ou amido, ledit monomère à fonction azotée étant choisi parmi du méthacrylamide, de l'acrylamide, de l'acrylate de N,N-diméthylaminoéthyle ou du méthacrylate de 3-diméthylaminopropyle,
(b) de 0,5 à 10% d'un monomère à fonction oxygénée, où l'atome O dans la chaine latérale du monomère est lié par simple liaison à un ou deux atomes de carbone de la chaine latérale, ledit monomère à fonction oxygénée étant choisi parmi du méthacrylate d'hydroxyéthyle ou du méthacrylate de glycidyle,
(c) de 0,5 à 10% d'un monomère à fonction acide ou ses sels, ledit monomère à fonction acide étant choisi parmi l'acide itaconique, et
(d) de 70% à 98,5% d'un ou de plusieurs monomères éthyléniquement insaturés différents de l'un quelconque des (a), (b) et (c) ci-dessus, mais capable de copolymériser avec l'un quelconque des monomères fonctionnels (a), (b) et (c), pour élaborer le squelette polymère, où tous les pourcentages se basent sur la quantité totale des monomères qui constituent la composition polymère finale (m/m) et les monomères s'additionnent pour faire 100%, où le monomère (d) est composé d'acrylate de butyle/styrène, ou d'acétate de vinyle/acrylate de butyle, ou d'acrylate de butyle/méthacrylate de méthyle, ou uniquement d'acrylate d'éthyle.

**2.** Composition polymère durcissable selon la revendication 1, où le monomère (a) est choisi parmi du méthacrylamide ou de l'acrylamide, et de préférence de l'acrylamide.

**3.** Composition polymère durcissable selon la revendication 1 ou 2, où la teneur en les trois constituants monomères (a), (b) et (c) se situe dans l'intervalle allant de 1,0% à 5,0% sur base de la quantité totale des monomères utilisés.

**4.** Procédé de production de la composition polymère durcissable selon l'une quelconque des revendications 1 à 3, comprenant l'étape de polymérisation des constituants monomères (a), (b), (c) et (d) par un procédé de polymérisation radicalaire en émulsion.

**5.** Procédé selon la revendication 4, où les constituants monomères (a), (b) et (c) sont copolymérisés au cours d'un procédé en une ou plusieurs étapes.

**6.** Procédé selon la revendication 4, où les constituants monomères (a), (b) et (c) sont copolymérisés avec le(s) monomère(s) (d) au cours d'opérations de polymérisation distinctes, assemblés par mélange ou par compoundage avant ou pendant l'application du produit résultant de la composition polymère durcissable.

**7.** Produit pouvant être obtenu par le procédé selon l'une quelconque des revendications 4 à 6.

**8.** Produit selon la revendication 7, qui est un film durcissable.

**9.** Produit ou film durci obtenu par réticulation du produit ou film selon la revendication 7 ou 8 à des températures situées dans l'intervalle allant de 120 à 180°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 3328456
- EP 0080635 A
- US 5021529 A
- EP 0003516 A
- US 5258477 A
- US 4191838 A
- US 4250070 A
- US 4281207 A
- US 4225689 A
- US 4476182 A
- WO 9854237 A
- US 20120156467 A


### Non-patent literature cited in the description


- **K. HUBNER ; F. KOLLINSKY.** *Angew. Makromol. Chem.,* 1970, vol. 11, 125-134
- **T. G. FOX.** *Bull. Am. Phys. Soc. (Ser. II),* 1956, vol. 1 (123
- Makromolekulare Stoffe [Macromolecular Compounds. **HOUBEN-WEYL.** Methoden der organischen Chemie. Georg-Thieme-Verlag, 1961, vol. XIV/1, 411-420
- Makromolekulare Stoffe. **HOUBEN-WEYL.** Methoden der organischen Chemie. Georg-Thieme-Verlag, 1961, vol. XIV/I, 192-208
- Encyclopedia of Polymer Science and Engineering. John Wiley & Sons, Inc, 1987, vol. 8, 659-677
- **D. C. BLACKLEY.** Emulsion Polymerisation. Science Publishers, Ltd, 1975, 155-465
- **D. C. BLACKLEY.** Polymer Latices. Chapman & Hall, 1997, vol. I, 33-415
- **H. WARSON.** The Applications of Synthetic Resin Emulsions. Ernest Bonn Ltd, 1972, 49-244
- **D. DIEDERICH.** Chemie in unserer Zeit. Verlag Chemie, 1990, vol. 24, 135-142
- **J. PIIRMA.** Emulsion Polymerisation. Academic Press, 1982, 1-287
- **F. HOLSCHER.** Dispersionen synthetischer Hochpolymerer [Dispersions of Synthetic High Polymers. Springer-Verlag, 1969, 1-160